**Europäisches Patentamt**

**European Patent Office**

**Office européen des brevets**

(11) Veröffentlichungsnummer: **0 049 215**
**A1**

# EUROPÄISCHE PATENTANMELDUNG

(21) Anmeldenummer: **81730098.1**

(22) Anmeldetag: **23.09.81**

(51) Int. Cl.³: **G 05 D 23/24**

(30) Priorität: **29.09.80 DE 3037272**

(43) Veröffentlichungstag der Anmeldung: **07.04.82**
**Patentblatt 82/14**

(84) Benannte Vertragsstaaten: **AT BE CH FR IT LI NL SE**

(71) Anmelder: **SIEMENS AKTIENGESELLSCHAFT Berlin und München, Postfach 22 02 61, D-8000 München 22 (DE)**

(72) Erfinder: **Grieger, Peter, Dipl.-Ing., Am Buschfeld 17a, D-1000 Berlin 47 (DE)**
Erfinder: **Anders, Horst-Günter, Ing.-grad., Hohenzollerndamm 193, D-1000 Berlin 31 (DE)**
Erfinder: **Nusche, Georg, Strasse 472, Nr 20, D-1000 Berlin 52 (DE)**
Erfinder: **Schwerdtner, Horst, Dipl.-Ing., Motzstrasse 76, D-1000 Berlin 30 (DE)**

(54) **Regelvorrichtung für Heizungsanlagen.**

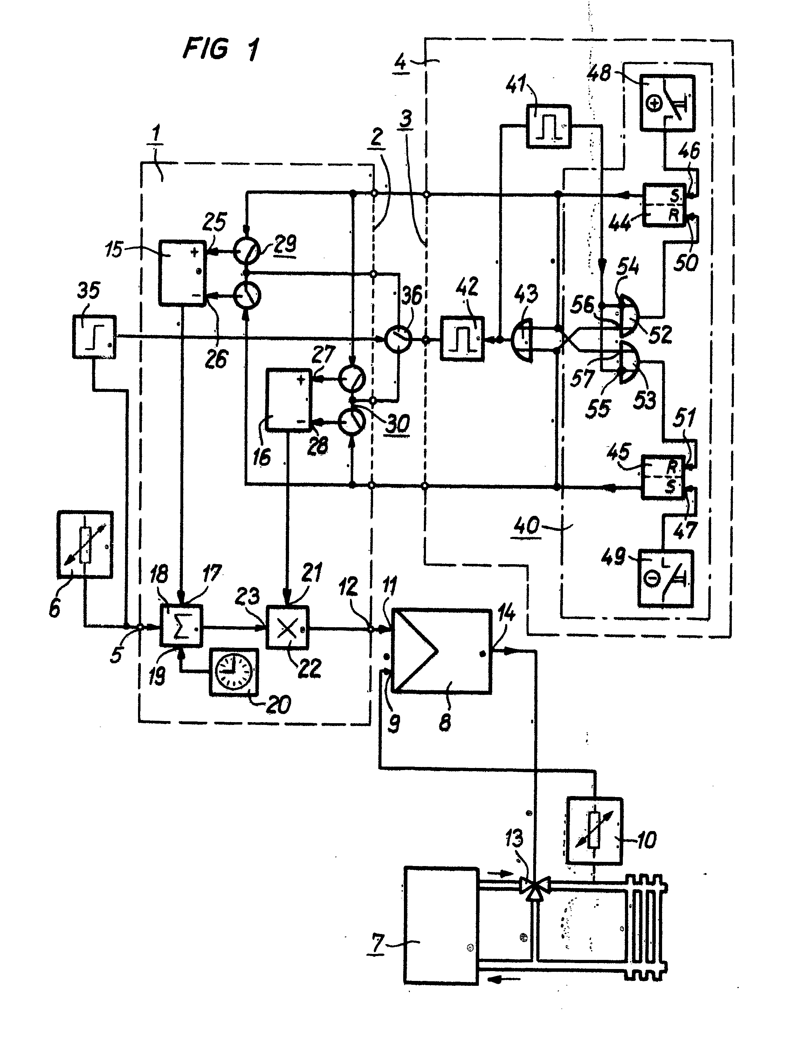

(57) Die Erfindung bezieht sich auf eine Regelvorrichtung für Heizungsanlagen mit einem Reglerbaustein, der mit einer von der Vorlauftemperatur des Heizmittels gesteuerten Regelgröße und mit einer von einer Führungstemperatur und einer Bewertungsschaltung beeinflußten Führungsgröße beaufschlagt ist. Um eine optimale Einstellung der Regelvorrichtung bei geringem Zeitaufwand zu ermöglichen, weist die Bewertungsschaltung (1) elektronische Speicher (15, 16) auf, deren Größe am Ausgang eine inkrementelle Änderung der Bewertung der Führungstemperatur durch Veränderung der Parameter der Heizkurve der Heizungsanlage bewirken. Die inkrementelle Änderung der Größe am Ausgang jedes Speichers (15, 16) wird durch eine Steueranordnung (4) hervorgerufen, die mit dem Eingang der Bewertungsschaltung (1) verbunden ist. Die Erfindung ist vor allem bei Heizungsreglern für Heizungsanlagen in Gebäuden einsetzbar (Fig. 1).

0049215

SIEMENS AKTIENGESELLSCHAFT
Berlin und München

Unser Zeichen
VPA 80 P 3783 E

## Regelvorrichtung für Heizungsanlagen

Die Erfindung bezieht sich auf eine Regelvorrichtung für Heizungsanlagen mit einem elektronischen Reglerbaustein, dessen einer Eingang mit einer von der Vorlauftemperatur eines Heizmittels gesteuerten Regelgröße beaufschlagt ist, dessen anderer Eingang über eine Bewertungsschaltung mit einer von einer Führungstemperatur und der Einstellung der Bewertungsschaltung abhängigen Führungsgröße beaufschlagt ist und an dessen Ausgang eine Stellgröße zur Veränderung der Vorlauftemperatur des Heizmittels zur Verfügung steht.

Bei einer bekannten Regelvorrichtung dieser Art (Siemens Katalog MP 36 Seien 4/1 bis 4/3, 1979) sind temperaturabhängige Widerstände zur Bildung von elektrischen Größen vorhanden, von denen die eine elektrische Größe der Außentemperatur (Führungstemperatur) des die Heizungsanlage umschließenden Gebäudes entspricht und aus der mittels einer Bewertungsschaltung die Führungsgröße gebildet wird; die andere elektrische Größe entspricht der Vorlauftemperatur des Heizmittels, wobei aus dieser elektrischen Größe die Regelgröße gebildet wird. Mit der Stellgröße am Ausgang des Reglerbausteins wird über einen Stellmotor ein Mischventil betätigt, welches das Heizmittel derart steuert, daß sich eine gewünschte Vorlauftemperatur und somit die gewünschte Heizwirkung der Heizungsanlage ergibt.

Die Bewertungsschaltung dieser bekannten Regelvorrichtung weist Einsteller auf, mit denen die Parameter der Bewertung manuell verändert werden können. Diese Parameter stellen Parameter einer Heizkurve dar, die bei der bekannten

Ag 3 Sby / 25.09.1980

0049215

Regelvorrichtung den Verlauf der Vorlauftemperatur in Abhängigkeit von der Außentemperatur darstellt. Durch Änderung eines Parameters wird hier eine Parallelverschiebung der Heizkurve (Niveauverschiebung) bewirkt. Ein weiterer veränderlicher Parameter stellt die Steigung der Heizkurve und ein dritter veränderlicher Parameter stellt die zeitabhängige Absenkung (Nacht) oder Anhebung (Tag) der Vorlauftemperatur dar.

Die manuelle Einstellung dieser Parameter ist insofern nachteilig, als die Zeitkonstanten bei Erwärmung oder Abkühlung des Gebäudes, der äußeren Umgebung des Gebäudes oder des Heizmittels relativ groß sind und somit eine zeitaufwendige Einstellung durch fachkundiges Bedienungspersonal notwendig ist. Eine Veränderung der Einsteller durch den Benutzer der Heizungsanlage ist auch schwierig, da die subjektiven Temperaturempfindungen bei Erwärmung oder Abkühlung zu falschen Einstellungen bzw. zu Übersteuerungen der Heizungsanlage führen können, was zusätzlich zu dem großen Zeitaufwand zu einem unnötigen großen Verbrauch von Heizenergie führt.

Der Erfindug liegt somit die Aufgabe zugrunde, eine Regelvorrichtung für Heizungsanlagen zu schaffen, bei der eine optimale Einstellung mit relativ geringem Zeitaufwand und einfacher Bedienung erreichbar ist.

Zur Lösung dieser Aufgabe ist bei einer Regelvorrichtung der eingangs angegebenen Art die Bewertungsschaltung mit einem Eingang mit einer Steueranordnung verbunden, an deren Ausgang Steuersignale zur inkrementellen Beeinflussung der Bewertungsschaltung anstehen; die Bewertungsschaltung weist mindestens einen elektronischen Speicher auf, dessen Eingang mit dem Ausgang der Steuerschaltung verbunden ist und an dessen Ausgang eine von den Steuersignalen inkrementell veränderte elektrische Größe ansteht; die Bewertungsschaltung enthält eine elektronische Verknüpfungsschaltung, die mit einem Eingang mit dem Ausgang des mindestens einen Speichers verbunden ist und deren anderer Eingang einen weiteren Eingang der Bewertungsschaltung bildet und deren Ausgang mit dem anderen Eingang des Reglerbausteins in Verbindung steht.

Vorteilhaft ist die erfindungsgemäße Regelvorrichtung insofern, als die inkrementelle Veränderung des Inhaltes des Speichers und somit der elektrischen Größe an seinem Ausgang in genau festgelegten Schrittweiten zu einer ebenfalls inkrementellen Änderung der Parameter der Heizkurve durch die Bewertungsschaltung führt. Die Verarbeitung dieser elektrischen Größe geschieht über die Verknüpfungsschaltung in schaltungstechnisch vorgegebener Weise, so daß ingesamt Bedienungsfehler beim Einstellen der Regelvorrichtung weitgehend vermieden sind und die Einstellung vom Benutzer der Heizungsanlage mit dem angestrebten Erfolg vorgenommen werden kann.

Besonders vorteilhaft ist es, wenn die Bewertungsschaltung zwei elektronische Speicher aufweist und die elektronische Verknüpfungsschaltung aus einem Summierer und einem Multiplizierer besteht, wobei ein Eingang des Summierers mit dem Ausgang des einen elektronischen Speichers verbunden ist, ein anderer Eingang des Summierers den weiteren Eingang der Bewertungsschaltung bildet, der Ausgang des Summierers mit einem Eingang des Multiplizierers verbunden ist, ein anderer Eingang des Multiplizierers mit dem Ausgang des anderen elektronischen Speichers verbunden ist und der Multiplizierer mit seinem Ausgang den Ausgang der Bewertungsschaltung bildet.

Durch die Anordnung von jeweils zwei elektronischen Speichern, wobei am Ausgang des einen Speichers die elektrische Größe z. B. zur Veränderung des Niveaus der Heizkurve und am Ausgang des anderen Speichers die elektrische Größe z. B. zur Veränderung der Heizkurvensteigung ansteht, ist erreicht, daß zwei Parameter der Heizkurve unabhängig voneinander verändert werden können. Hierdurch kann die Einstellung durch Veränderung von jeweils verschiedenen Parametern in einem kürzest möglichen Zeitraum bei Vermeidung von unnötigem Energieverbrauch vorgenommen werden. Die Verknüpfung der elektronischen Speicher über einen Summierer bzw. einen Multiplizierer mit dem der Führungstemperatur entsprechenden Meßwert gewährleistet ebenso eine Einstellung der Regelvorrichtung in einem möglichst kurzen Zeitraum.

Weiterhin ist vorteilhaft, wenn die Absenkung (Nacht) bzw. Anhebung (Tag) über einen dritten Eingang des Summierers mit einer üblichen Zeitschaltuhr, die in vorwählbaren Zeiträumen ein Signal abgibt, vorgenommen wird, was schaltungstechnisch auf einfache Weise auszuführen ist.

Um den jeweils günstigsten Parameter der Heizkurve, z. B. Steigung oder Niveau, abhängig von der Führungstemperatur, zu verändern, ist vorteilhaft, wenn ein Zweipunktschalter vorhanden ist, dessen Ausgang mit einem Umschalter verbunden ist, wobei der Umschalter den Eingang jeweils eines der elektronischen Speicher mit der Steueranordnung in Abhängigkeit von dem Wert des jeweils am weiteren Eingang der Bewertungsschaltung anstehenden Signals verbindet. Hierdurch kann vorteilhafterweise erreicht werden, daß die elektrische Größe am Ausgang des einen elektronischen Speichers, der z. B. zu einer Veränderung der Heizkurvensteigung führt, dann verändert wird, wenn die Führungstemperatur extrem niedrig ist. Es ist somit möglich, bei extrem niedriger Führungstemperatur eine relativ große Änderungsgeschwindigkeit der Vorlauftemperatur zu erreichen, was zu einer schnellen Erwärmung des Gebäudes führt. Bei einer höheren Führungstemperatur wird die elektrische Größe am Ausgang des anderen Speichers verändert, der z. B. zur Veränderung des Niveaus führt, so daß in diesem Falle die Vorlauftemperatur nur mäßig verändert wird.

Die Steueranordnung kann in vorteilhafter Weise entweder als Analogschaltung oder als Digitalschaltung ausgeführt sein, wobei das Ausgangssignal der Steueranordnung ein elektrischer Impuls festgelegter Dauer ist und die elektronischen Speicher als analoge Integrierschaltungen ausgeführt sind oder das Ausgangssignal ein binär codiertes Signal ist und die elektronischen Speicher als Digitalspeicher ausgeführt oder Bestandteil einer Digitalspeichereinheit sind.

Vorteilhaft ist es weiterhin, wenn die Steueranordnung ein Kurzzeitglied zur Festlegung der Dauer des elektrischen Impulses an ihrem Ausgang enthält, wobei der Ausgang des Kurzzeitgliedes über den Umschalter mit den Eingängen der Speicher verbindbar ist, und wenn jeder Speicher eine positive und negative Eingangsklemme aufweist, denen jeweils eine Schaltanordnung vorgeschaltet ist; ein Signal an der jeweils positiven Eingangsklemme der Speicher führt zu einer Vergrößerung der elektrischen Größe an seinem Ausgang und ein Signal an der negativen Eingangsklemme zu einer Verkleinerung der elektrischen Größe an seinem Ausgang. Die Steueranordnung enthält einen Signalgeber, dessen Ausgänge über ein ODER-Glied mit dem Eingang des Kurzzeitgliedes und mit den Schaltanordnungen an den Eingängen der Speicher verbunden sind.

Bei der letztgenannten Ausführungsform ist die Steueranordnung als Analogschaltung ausgeführt; durch die Dauer des elektrischen Impulses am Ausgang des Kurzzeitgliedes ist der Betrag der inkrementellen Veränderung des Inhaltes der elektronischen Speicher bestimmt. Die Richtung dieser Veränderung - vergrößern oder verkleinern - kann auf einfache Weise dadurch bestimmt werden, daß der elektrische Impuls mittels der Schaltanordnungen auf entweder die positiven oder die negativen Eingangsklemmen der Speicher geführt wird. Es ist auch möglich, anstatt des einen Kurzzeitgliedes zwei Kurzzeitglieder vorzusehen, von denen jeweils eines den Eingangsklemmen eines elektronischen Speichers zugeordnet ist. Hierdurch kann in vorteilhafter Weise der Betrag der inkrementellen Änderung des Inhaltes jedes Speichers schon mittels des Kurzzeitgliedes verschieden gewählt werden, wodurch gleiche Speicher eingesetzt werden können. Die Schaltanordnungen werden durch weitere Ausgangssignale der Steueranordnung betätigt.

Weiterhin ist vorteilhaft, wenn ein Langzeitglied vorhanden ist, dessen Eingang mit einem Ausgang des Signalgebers verbunden ist und dessen Ausgangssignal für einen Zeitraum nach einer Signalgabe durch den Signalgeber eine Wiederholung dieser Signalgabe verhindert. Mit dieser Anordnung eines Langzeitgliedes ist auf einfache Weise erreicht, daß die Parameter der Heizkurve für einen vorwählbaren Zeitraum nicht in der gleichen Richtung verändert werden können und somit eine Übersteuerung oder eine sonstige Fehlbedienung seitens des Benutzers verhindert ist. Der Zeitraum ist abhängig von der Größe der Heizungsanlage und des sie umgebenden Gebäudes und könnte z. B. ca. 2 Stunden betragen.

Bei einer vorteilhaften Weiterbildung der erfindungsgemäßen Regelvorrichtung enthält der Signalgeber zwei Kippschaltungen (Flip-Flop), von denen die eine mit ihrem Ausgang mit der Schaltanordnung verbunden ist, derart, daß nach dem Setzen dieser Kippschaltung die Schaltanordnungen so betätigt sind, daß die positiven Eingangsklemmen der nachgeordneten Speicher angeschaltet sind und die andere Kippschaltung mit ihrem Ausgang mit den Schaltanordnungen verbunden ist, derart, daß nach dem Setzen dieser Kippschaltung die Schaltanordnungen so betätigt sind, daß die negativen Eingangsklemmen der nachgeordneten Speicher angeschaltet sind; die Ausgänge der Kippschaltungen sind mit Eingängen des ODER-Gliedes verbunden.

Mit den beiden Kippschaltungen ist erreicht, daß der Benutzer der Heizungsanlage durch Geben eines Setzimpulses auf eine der Kippschaltung die Parameter der Heizkurve auf einfache Weise verändern kann. Da die Ausgänge jeder Kippschaltung auch mit den Schaltanordnungen verbunden sind, ist auch die Richtung der Veränderung der Einstellung der Parameter bestimmbar, weil durch Setzen der einen Kippschaltung die positiven Eingangsklemmen und durch Setzen der anderen Kippschaltung die negativen Eingangsklemmen der elektronischen Speicher mit dem Eingang der Bewertungsschaltung verbunden werden.

Besonders vorteilhaft ist es, wenn der Ausgang des Langzeitgliedes auf jeweils einen Eingang von zwei weiteren ODER-Gliedern geführt ist, und der jeweils andere Eingang dieser ODER-Glieder mit dem Ausgang jeweils einer der Kippschaltungen verbunden ist, und der Ausgang des jeweils einen dieser ODER-Glieder mit dem Rücksetzeingang der Kippschaltung verbunden ist, deren Ausgang mit dem jeweils anderen ODER-Glied verbunden ist.

Hiermit ist erreicht, daß das Setzen jeweils einer Kippschaltung zur Bildung eines Rücksetzimpulses für die
jeweils andere Kippschaltung führt. Diese Anordnung
ermöglicht dem Benutzer der Heizungsanlage einen eventuellen
Irrtum in der Wahl der Richtung der Änderung der Einstellung
mit einem nachträglichen Setzen der jeweils richtigen
Kippschaltung auf einfache Weise zu korrigieren. Ein
nochmaliges Setzen der jeweils gesetzten Kippschaltung
ist jedoch hier, während der vom Langzeitglied bestimmten
Zeit, verhindert, wodurch die Bedienungssicherheit weiterhin
gewährleistet ist.

Bei einer anderen Ausführungsform der erfindungsgemäßen
Regelvorrichtung ist die Steueranordnung eingangsseitig
mit einem Temperaturgeber verbunden und enthält einen
Dreipunktschalter, auf dessen Eingang mit dem Ausgang
des Temperaturgebers verbunden ist, wobei der Dreipunktschalter zur Ansteuerung der Bewertungsschaltung zwei
Ausgänge aufweist, an deren einem Ausgang ein Signal
bei Überschreiten eines oberen Grenzwertes des Ausgangssignals der Temperaturgeber ansteht und an dem anderen
Ausgang ein Signal bei Unterschreiten eines unteren
Grenzwertes gebildet ist.

Diese Ausführungsform findet in vorteilhafter Weise
dann Anwendung, wenn eine z. B. durch Erfassung der
Innentemperatur des die Heizungsanlage umgebenden Gehäuses,
weitere Regelgröße gebildet ist. Die Erfassung der Innentemperatur kann auch mit einem temperaturabhängigen
Widerstand erfolgen, der an den Eingang eines Regelverstärkers angeschlossen sein kann. Die Auswertung dieser
Regelgröße mit Hilfe eines Dreipunktschalters ermöglicht
die Bildung von elektrischen Impulsen zur Ansteuerung
der Speicher.

Damit bei der Erfassung, z. B. der Innentemperatur, kleine bzw. kurzzeitige Änderungen der Innentemperatur
nicht zu einer Abgabe eines elektrischen Impulses und
zu einer Veränderung der Einstellung der Parameter führen, sind die jeweils obere und und die jeweils untere
Ansprechgrenze des Dreipunktschalters weit auseinandergelegt, und es werden in vorteilhafter Weise die Ausgänge
des Dreipunktschalters mit dem Eingang einer Zeitschaltung verbunden, die ein Signal abgibt, wenn eines ihrer
Eingangssignale einen festgelegten Zeitraum ansteht.

Die Erfindung wird anhand der Figuren erläutert, wobei
in
Fig. 1 das Blockschaltbild eines Ausführungsbeispiels
der erfindungsgemäßen Regelvorrichtung, in
Fig. 2 ein Impulsdiagramm der in der Steueranordnung
erzeugten Impulse und in
Fig. 3 ein Blockschaltbild eines weiteren Ausführungsbeispiels
der erfindungsgemäßen Regelvorrichtung dargestellt ist.

Bei dem dargestellten Ausführungsbeispiel nach der Fig.
1 ist eine Bewertungsschaltung 1 vorhanden, deren einer
Eingang 2 mit dem Ausgang 3 einer Steueranordnung 4
verbunden ist. An einem weiteren Eingang 5 der Bewertungsschaltung ist ein Temperaturfühler 6 zur Erfassung der
Außentemperatur eines eine Heizungsanlage 7 umgebenden
Gebäudes angeschlossen. Der Bewertungsschaltung 1 ist
ein Reglerbaustein 8 nachgeordnet, dessen einer Eingang
9 mit einem Temperaturfühler 10 zur Erfassung der Vorlauftemperatur des Heizmittels der Heizungsanlage 7 verbunden ist; ein anderer Eingang 11 des elektronischen
Reglerbausteins 8 ist mit dem Ausgang 12 der Bewertungsschaltung 1 verbunden. Die Heizungsanlage 7 weist außerdem ein Mischventil 13 auf, das von einer Stellgröße
am Ausgang 14 des Reglerbausteins 8 gesteuert wird.

Die Bewertungsschaltung 1 der Regelvorrichtung weist zwei elektronische Speicher 15 und 16 auf, wobei der Ausgang des einen Speichers 15 auf einen Eingang 17 eines Summierers 18 geführt ist. Ein weiterer Eingang des Summierers 18 stellt den Eingang 5 der Bewertungsschaltung 1 dar; ein dritter Eingang 19 des Summierers 18 ist mit dem Ausgang einer Zeitschaltuhr 20 verbunden. Der andere elektronische Speicher 16 ist mit seinem Ausgang an einem Eingang 21 eines Multiplizierers 22, angeschlossen, der ebenso Bestandteil der Verknüpfungsschaltung ist; ein anderer Eingang 23 des Multiplizierers 22 ist mit dem Ausgang des Summierers 18 verbunden, und der Ausgang des Multiplizierers 22 bildet den Ausgang 12 der Bewertungsschaltung 1. Die elektronischen Speicher 15 und 16 weisen jeweils eine positive Eingangsklemme 25 bzw. 27 und eine negative Eingangsklemme 26 bzw. 28 auf, die über Schaltanordnungen 29 und 30 mit dem Eingang 2 der Bewertungsschaltung 1 verbunden sind.

Ein Zweipunktschalter 35 ist mit seinem Eingang an den weiteren Eingang 5 der Bewertungsschaltung 1 und mit seinem Ausgang an einem Umschalter 36 angeschlossen, durch den je nach seiner Schalterstellung entweder der elektronische Speicher 15 oder der elektronische Speicher 17 mit dem Ausgang 3 der Steueranordnung 4 verbunden werden.

Die Steueranordnung 4 weist einen Signalgeber 40, ein Langzeitglied 41 und ein Kurzzeitglied 42 auf, dessen Eingang mit dem Ausgang eines ODER-Gliedes 43 verbunden ist. Der Signalgeber 40 enthält zwei Kippschaltungen (Flip-Flops) 44 und 45, deren Setzeingänge 46 und 47 jeweils mit einer Tastanordnung 48 bzw. 49 verbunden sind. Die Ausgänge der Kippschaltungen 43 und 44 sind auf den Ausgang 3 der Steueranordnung 4 und über das ODER-Glied 43 auf den Eingang des Kurzzeitgliedes 42 geführt. Der Ausgang des Kurzzeitgliedes 42 ist über den Ausgang 3 der Steueranordnung 4 zum Umschalter 36 geführt. Rücksetzeingänge 50 bzw. 51 der Kippschaltungen 44 bzw. 45 sind jeweils mit dem Ausgang von weiteren ODER-Gliedern 52 bzw. 53 verbunden, wobei negierte Eingänge 54 bzw. 55 der ODER-Glieder mit dem Ausgang des Langzeitgliedes 41 verbunden sind; der jeweils andere Eingang 56 bzw. 57 jeweils eines dieser ODER-Glieder ist mit dem Ausgang der Kippschaltung 44 bzw. 45 verbunden, deren Rücksetzeingänge 50 bzw. 51 mit dem Ausgang des jeweils anderen Oder-Gliedes verbunden sind. Der Eingang des Langzeitgliedes 41 ist mit dem Eingang des Kurzzeitgliedes 42 verbunden.

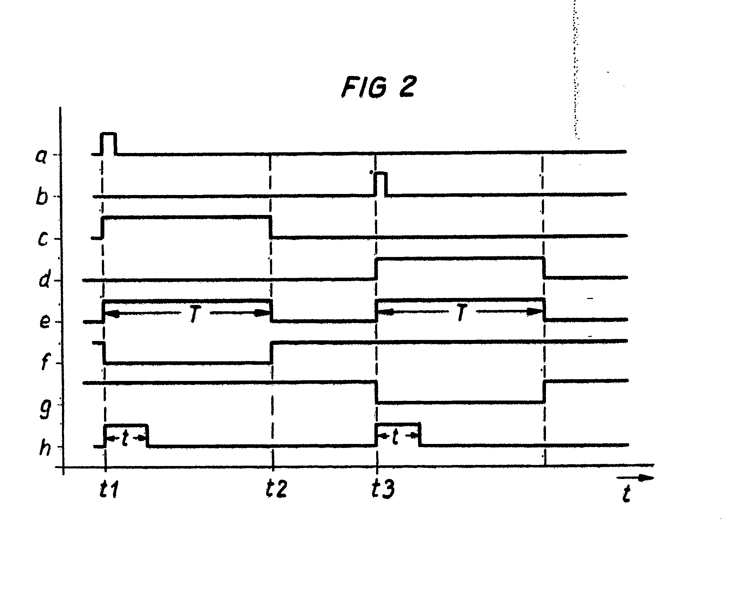

Zur Veranschaulichung der Funktionsweise der Regelvorrichtung ist in der Fig. 2 ein Impulsdiagramm der in der Steueranordnung nach der Fig. 1 auftretenden Impulse dargestellt. Der Impulsverlauf a stellt die Setzimpulse am Setzeingang der Kippschaltung 44 dar, die bei diesem Ausführungsbeispiel zu einer inkrementellen Vergrößerung des Inhaltes des elektronischen Speichers 15 bzw. 16 führen. Der Impulsverlauf b stellt die Setzimpulse am Eingang der Kippschaltung 45 dar, die hier zu einer Verringerung des Inhaltes des Speichers 15 bzw. 16 führen. Die Impulsverläufe c und d stellen die Ausgangsimpulse der Kippschaltungen 44 und 45 dar; Impulse entsprechend dem Impulsverlauf e stehen am Eingang des Kurzzeitgliedes 42 an, wobei die Zeitdauer T dieser Impulse durch das Langzeitglied 41 bestimmt ist. An den Rücksetzeingängen 50 bzw. 51 stehen die Impulse f bzw. g an, die beim Setzen der jeweils einen Kippschaltung zu einer Rücksetzung der jeweils anderen Kippschaltung führen. Die elektrischen Impulse am Ausgang des Kurzzeitgliedes 42 sind durch den Impulsverlauf h dargestellt, wobei die Dauer t dieser Impulse durch das Kurzzeitglied 42 bestimmt sind.

Aus der dargestellten Figur 2 ist ersichtlich, daß zum Zeitpunkt t1 die Kippschaltung 44 mit einem Setzimpuls beaufschlagt wird; dieser Impuls führt zu einem elektrischen Impuls h der Dauer t am Ausgang des Kurzzeitgliedes 42. Für den Zeitraum T,der vom Langzeitglied 41 bestimmt und aus dem Impulsverlauf e ersichtlich ist,ist eine weitere Signalgabe mit der gleichen Kippschaltung, die zum Zeitpunkt t1 gesetzt worden ist, verhindert, da die gesetzte Kippschaltung 44 in ihrem Zustand verharrt. Zum Zeitpunkt t2, nach dem Zeitraum T, der der Differenz t2 - t1 entspricht, werden beide Kippschaltungen 44 und 45 zurückgesetzt und können somit zur Abgabe eines neuen Impulses am Ausgang der Steueranordnung 4 gesetzt werden. Zum Zeitpunkt t3 ist derselbe Vorgang durch Setzen der Kippschaltung 45 wiederholt. Durch Setzen z. B. der Kippschaltung 45 sind die Schaltanordnungen 29 und 30 derart betätigt, daß die elektrischen Impulse h am Ausgang des Kurzzeitgliedes 41 auf die negativen Eingangsklemmen 26 oder 28 der elektronischen Speicher 15 oder 16 geführt sind, was zu einer inkrementellen Verringerung des Inhaltes des jeweiligen Speichers führt, wobei der Betrag der inkrementellen Verringerung durch die Dauer t des elektrischen Impulses h bestimmt ist. Durch Setzen der Kippschaltung 44 werden in gleicher Weise die positiven Eingangsklemmen 25 oder 27 der Speicher 15 oder 16 mit den Impulsen beaufschlagt, was zu einer inkrementellen Vergrößerung des Inhalts des jeweiligen Speichers führt.

Die elektrische Größe am Ausgang des jeweils durch den Zweipunktschalter 35 und den Umschalter 36 angesteuerten elektronischen Speicher 15 bzw. 16 ist über den Summierer 18 bzw. den Multiplizierer 22 mit der Meßgröße des Temperaturfühlers 6 verknüpft und führt zu einer Veränderung der Bewertung dieser Meßgröße in der Bewertungsschaltung 1. Im dargestellten Ausführungsbeispiel nach der Fig.

1 dient die elektrische Größe am Ausgang des Speichers 15 einer Veränderung des Niveaus der Heizkurve der Heizungsanlage 7 und die elektrische Größe am Ausgang des Speichers 16 einer Veränderung der Steilheit der Heizkurve der Heizungsanlage 7. Das durch die Stellgröße angesteuerte Mischventil 13 bewirkt eine Änderung der Vorlauftemperatur der Heizungsanlage 7, wobei die Änderung der Vorlauftemperatur mittels des Temperaturfühlers 10 erfaßt wird und als Eingangsgröße auf den einen Eingang 9 des Reglerbausteins 8 zurückgeführt wird. Durch eine quasi selbstätige Einstellung der Parameter der Heizkurve der Heizungsanlage über die Steueranordnung 4 und die Bewertungsschaltung 1, wobei der Benutzer nur die Richtung der Änderung der Einstellung anzugeben braucht, ist somit eine optimale Einstellung und die gewünschte Heizwirkung der Heizungsanlage gewährleistet.

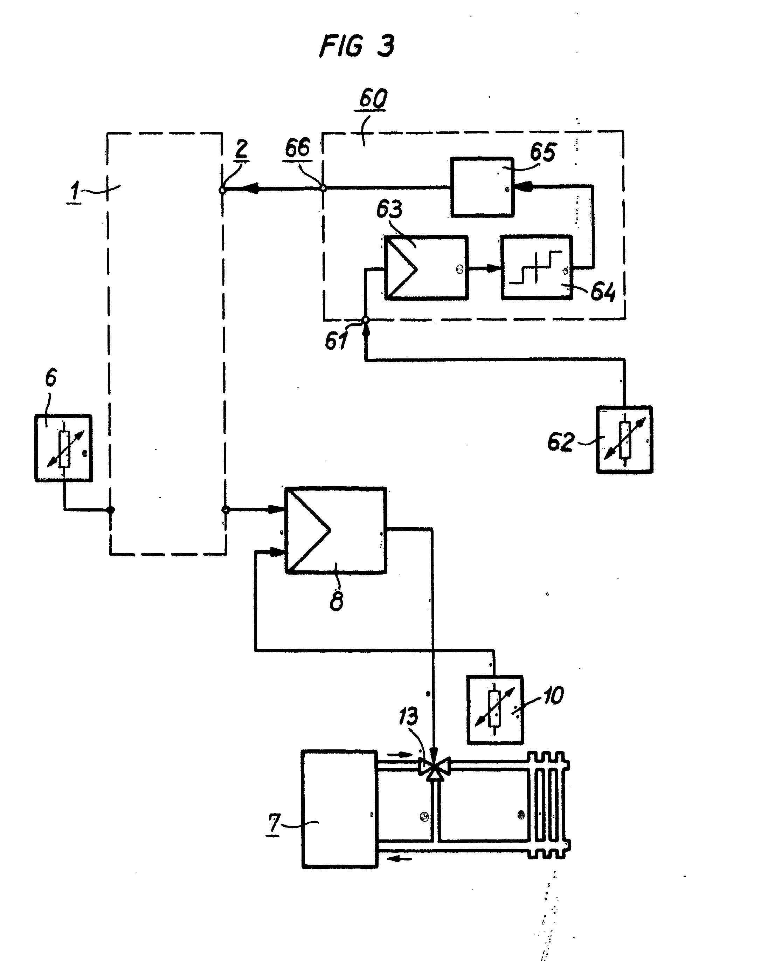

Das in der Fig. 3 dargestellte weitere Ausführungsbeispiel entspricht bis auf den Aufbau der Steueranordnung dem vorher beschriebenen Ausführungsbeispiel. Die Steueranordnung 60 nach der Fig. 3 weist einen Eingang 61 auf, der mit einem Signal eines Temperaturgebers 62 beaufschlagt ist. Der Eingang 61 der Steueranordnung 60 ist über einen Regelverstärker 63, einen Dreipunktschalter 64 und über ein Zeitglied 65 mit dem Ausgang 66 dieser Steueranordnung 60 verbunden.

Der Temperaturgeber 62 nach diesem Ausführungsbeispiel ermöglicht die zusätzliche Erfassung z. B. der Innentemperatur des die Heizungsanlage 7 umgebenden Gebäudes und deren Auswertung mittels des Dreipunktschalters 64 und des Zeitgliedes 65. Hierdurch ist eine völlig selbsttätige Einstellung der Parameter der Heizkurve, – die Einstellung ist bei diesem Ausführungsbeispiel abhängig von der Innentemperatur des Gebäudes – ohne zusätzliche Eingriffe seitens des Benutzers der Heizungsanlage ermöglicht, wodurch der Aufwand bei Inbetriebnahme und Wartung
der Heizungsanlage erheblich vermindert ist.

12 Ansprüche
3 Figuren

Patentansprüche

1. Regelvorrichtung für Heizungsanlagen mit
   a) einem elektronischen Reglerbaustein, dessen
      a1) einer Eingang mit einer von der Vorlauftempe-
          ratur eines Heizmittels gesteuerten Regel-
          größe beaufschlagt ist, dessen
      a2) anderer Eingang über eine Bewertungsschaltung mit einer von einer Führungstemperatur
          und der Einstellung der Bewertungsschaltung
          abhängigen Führungsgröße beaufschlagt ist
          und an dessen
      a3) Ausgang eine Stellgröße zur Veränderung der
          Vorlauftemperatur des Heizmittels zur Verfü-
          gung steht,
   d a d u r c h   g e k e n n z e i c h n e t , daß
      b) die Bewertungsschaltung (1) mit einem Eingang
         (2) mit einer Steueranordnung (4) verbunden ist,
      b1) an deren Ausgang (3) Steuersignale zur inkrementellen Beeinflussung der Bewertungsschaltung (1)
          anstehen, daß
      c) die Bewertungsschaltung (1) mindestens einen elektronischen Speicher (15, 16) aufweist,
      c1) dessen Eingang mit dem Ausgang der Steuerschaltung (4) verbunden ist und an
      c2) dessen Ausgang eine von den Steuersignalen
          inkrementell veränderte elektrische Größe
          ansteht, daß
      d) die Bewertungsschaltung (1) eine elektronische Verknüpfungschaltung enthält, die
      d1) mit einem Eingang mit dem Ausgang des mindestens
          einen Speichers (15, 16) verbunden ist und
      d2) deren anderer Eingang einen weiteren Eingang (5)
          der Bewertungsschaltung (1) bildet und
      d3) deren Ausgang mit dem anderen Eingang (11) des
          Reglerbausteins (8) in Verbindung steht.

0049215

2. Regelvorrichtung nach Anspruch 1, d a d u r c h
g e k e n n z e i c h n e t , daß

e) die Bewertungsschaltung (1) zwei elektronische
Speicher (15, 16) aufweist und daß

f) die elektronische Verknüpfungsschaltung aus einem
Summierer (18) und einem Multiplizierer (22) besteht,
wobei

f1) ein Eingang (17) des Summierers (18) mit dem
Ausgag des einen elektronischen Speichers
(15) verbunden ist,

f2) ein anderer Eingang des Summierers den weiteren
Eingang (5) der Bewertungsschaltung (1) bildet,

f3) der Ausgang des Summierers (18) mit einem
Eingang (23) des Multiplizierers (22) verbunden
ist,

f4) ein anderer Eingang (23) des Multiplizierers
(22) mit dem Ausgang des anderen elektronischen
Speichers (16) verbunden ist und

f5) der Multiplizierer (22) mit seinem Ausgang
den Ausgang (12) der Bewertungsschaltung (1)
bildet.

3. Regelvorrichtung nach Anspruch 2, d a d u r c h
g e k e n n z e i c h n e t , daß

g) ein dritter Eingang (19) des Summierers (18) mit
dem Ausgang einer Zeitschaltuhr (20) verbunden
ist, die

g1) zu vorwählbaren Zeitpunkten ein Signal abgibt.

4. Regelvorrichtung nach Anspruch 2 oder 3 ,
d a d u r c h g e k e n n z e i c h n e t , daß

h) an den weiteren Eingang (5) der Bewertungsschaltung
(1) ein Zweipunktschalter (35) angeschlossen ist, h1) dessen Ausgang mit einem Umschalter (36) verbunden ist, der

h2) den Eingang jeweils eines der elektronischen Speicher (15, 16) mit der Steueranordnung (4) in Abhängigkeit von dem Wert des jeweils am weiteren Eingang (5) der Bewertungsschaltung (1) anstehenden Signals verbindet.

5. Regelvorrichtung nach einem der vorhergehenden Ansprüche, d a d u r c h   g e k e n n z e i c h n e t , daß
    i) das Ausgangssignal der Steueranordnung (4) ein elektrischer Impuls festgelegter Dauer ist und daß
    j) die elektronischen Speicher (15, 16) als analoge Integrierschaltungen ausgeführt sind.

6. Regelvorrichtung nach Anspruch 1 bis 4, d a d u r c h   g e k e n n z e i c h n e t , daß
    k) das Ausgangssignal ein binär codiertes Signal ist und
    l) die elektronischen Speicher als Digitalspeicher ausgeführt oder Bestandteil einer Digitalspeichereinheit sind.

7. Regelvorrichtung nach Anspruch 5, d a d u r c h   g e k e n n z e i c h n e t , daß
    m) die Steueranordnung (4) ein Kurzzeitglied (42) zur Festlegung der Dauer des elektrischen Impulses enthält, wobei
    m1) der Ausgang des Kurzzeitgliedes (42) über den Umschalter (36) mit den Eingängen der Speicher (15, 16) verbindbar ist, und daß
    n) jeder Speicher (15, 16) eine positive (25, 27) und negative Eingangsklemme ( 26, 28) aufweist, denen jeweils eine Schaltanordnung (29, 30) vorgeschaltet ist, wobei
    n1) ein Signal an der jeweils positiven Eingangsklemme (25, 27) der Speicher (15, 16) zu einer Vergrößerung der elektrischen am Ausgang führt und

n2) ein Signal an der negativen Eingangsklemme (26, 28) zu einer Verkleinerung der elektrischen Größe am Ausgang führt, und daß

o) die Steueranordnung (4) einen Signalgeber (40) enthält, dessen Ausgänge

o1) über ein ODER-Glied (43) mit dem Eingang des Kurzzeitgliedes (42) und mit den Schaltanordnungen (29, 30) an den Eingängen der Speicher (15, 16) verbunden sind.

8. Regelvorrichtung nach Anspruch 7, d a d u r c h  g e k e n n z e i c h n e t , daß

p) ein Langzeitglied (41) vorhanden ist,

p1) dessen Eingang mit einem Ausgang des Signalgebers (40) verbunden ist und

p2) dessen Ausgangssignal für einen Zeitraum nach einer Signalgabe durch den Signalgeber (40) eine Wiederholung dieser Signalgabe verhindert.

9. Regelvorrichtung nach Anspruch 7 oder 8, d a d u r c h  g e k e n n z e i c h n e t  daß

q) der Signalgeber (40) zwei Kippschaltungen (Flip-Flop) (44, 45) enthält,

q1) von denen die eine (43) mit ihrem Ausgang mit den Schaltanordnungen (29, 30) verbunden sind, derart, daß nach dem Setzen dieser Kipp-schaltung die Schaltanordnungen (29, 30) so betätigt sind, daß die positiven Eingangsklemmen (25 27) der nachgeordneten Speicher (15, 16) angeschaltet sind und

q2) die andere Kippschaltung (45) mit ihrem Ausgang mit den Schaltanordnungen (29, 30) verbunden ist, derart, daß nach dem Setzen dieser Kippschaltung (45) die Schaltanordnungen (29, 30) so betätigt sind, daß die negativen Eingangsklemmen (26, 28) der nachgeordneten Speicher (15,16) angeschaltet sind und daß

r) die Ausgänge der Kippschaltungen mit Eingängen des ODER-Gliedes (43) verbunden sind.

10. Regelvorrichtung nach Anspruch 9, d a d u r c h g e k e n n z e i c h n e t , daß

s) der Ausgang des Langzeitgliedes (41) auf jeweils einen Eingang (54, 55) von zwei weiteren ODER-Gliedern (52, 53) geführt ist, und

s1) der jeweils andere Eingang (56, 57) dieser ODER-Glieder (52, 53) mit dem Ausgang jeweils einer der Kippschaltungen (44, 45) verbunden ist und daß

t) der Ausgang des jeweils einen dieser ODER-Glieder mit dem Rücksetzeingang (50, 51) der Kippschaltung (44, 45) verbunden ist, deren Ausgang mit dem jeweils anderen ODER-Glied verbunden ist.

11. Regelvorrichtung nach einem der Ansprüche 1 bis 6, d a d u r c h g e k e n n z e i c h n e t , daß

u) die Steueranordnung (50) eingangsseitig mit einem Temperaturgeber verbunden ist und einen Dreipunktschalter (64) enthält, dessen Eingang mit dem Ausgang des Temperaturgebers (62) verbunden ist, wobei der Dreipunktschalter

u1) zur Ansteuerung der Bewertungsschaltung 1 zwei Ausgänge aufweist, an deren

u1.1) einem Ausgang ein Signal bei Überschreiten eines oberen Grenzwertes des Ausgangssignals der Temperaturgeber (62) ansteht und

u1.2) an den anderem Ausgang ein Signal bei Unterschreiten eines unteren Grenzwertes ansteht.

12. Regelvorrichtung nach Anspruch 11, d a d u r c h

g e k e n n z e i c h n e t , daß

v) die Ausgänge des Dreipunktschalters (64) mit
dem Eingang einer Zeitschaltung (65) verbunden
sind, die

v1) ein Signal abgibt, wenn eines ihrer Eingangssignale einen festgelegten Zeitraum ansteht.

FIG 1

FIG 2

FIG 3

## EUROPÄISCHER RECHERCHENBERICHT

Europäisches Patentamt

EP 81 73 0098

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 809 770 (CENTRA-BURKLE) <br> * Seite 13, Zeile 15 bis Seite 15, Zeile 3; Seite 15, Zeile 14 bis Seite 16, Zeile 10; Seite 18, Zeile 15 bis Seite 20, Zeile 20; Seite 32, Zeile 27 bis bis Seite 34, Zeile 4; Abbildung 3 * | 1 |
| | -- | |
| | DE - B - 1 105 584 (E. KIEBACK) <br> * Spalte 1, Zeile 38 bis Spalte 2, Zeile 26; Abbildung * | 1,11 |
| | -- | |
| | GB - A - 540 087 (J. AUGIER-QUEY-RAS) <br> * Seite 2, Zeilen 24 bis 51; Seite 8, Zeile 107 bis Seite 11, Zeile 39; Abbildung 1 * | 1,11 |
| | -- | |
| | GB - A - 573 028 (B. VUILLE) <br> * Seite 4, Zeile 42 bis Seite 7, Zeile 10; Abbildungen 1-3 * | 1,11 |
| | -- | |
| A | US - A - 3 622 767 (R. KOEPCKE) <br> * Zusammenfassung; Spalte 2, Zeile 53 bis Spalte 4, Zeile 24; Abbildung 1 * | 1 |
| | -- | |
| A | DE - A - 2 444 753 (THORN) <br> * Seite 29, Zeile 1 bis Seite 30, Zeile 14; Abbildung 1 * | 1 |

**KLASSIFIKATION DER ANMELDUNG (Int. Cl.³)**

G 05 D 23/24

**RECHERCHIERTE SACHGEBIETE (Int. Cl.³)**

G 05 D 23/19
         23/20
         23/24
F 24 D 19/10

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-01-1982 | HELOT |

EPA form 1503.1 06.78